# EUROPEAN PATENT SPECIFICATION

(11) **EP 3 596 852 B1**
(45) Date of publication and mention of the grant of the patent: **29.10.2025**
(21) Application number: 18711673.6
(22) Date of filing: 13.03.2018
(51) Int. Cl.: H04B 17/391

(54) **SIGNAL DETECTION BASED ON STOCHASTIC RESONANCE**
SIGNALDETEKTION AUF BASIS VON STOCHASTISCHER RESONANZ
DÉTECTION DE SIGNAL BASÉE SUR UNE RÉSONANCE STOCHASTIQUE

(30) Priority: 16.03.2017 GB 201704170
(43) Date of publication of application: 22.01.2020
(73) Proprietor: University of Surrey, Surrey GU2 7XH (GB)
(72) Inventor: TAFAZOLLI, Rahim, Guildford Surrey GU2 7XH (GB); VAHID, Seiamak, Guildford Surrey GU2 7XH (GB); MUZAMMIL, Hira, Guildford Surrey GU2 7XH (GB)
(74) Representative: Kennedy, Richard E.
(86) International application number: PCT/GB2018/050635
(87) International publication number: WO 2018/167476

(56) References cited:
- WEI CHEN ET AL: "Stochastic Resonance Noise Enhanced Spectrum Sensing in Cognitive Radio Networks", GLOBECOM 2010, 2010 IEEE GLOBAL TELECOMMUNICATIONS CONFERENCE, IEEE, PISCATAWAY, NJ, USA, 6 December 2010 (2010-12-06), pages 1 - 6, XP031846468, ISBN: 978-1-4244-5636-9
- WANG JUN ET AL: "Adaptive Bistable Stochastic Resonance Aided Spectrum Sensing", IEEE TRANSACTIONS ON WIRELESS COMMUNICATIONS, IEEE SERVICE CENTER, PISCATAWAY, NJ, US, vol. 13, no. 7, 1 July 2014 (2014-07-01), pages 4014 - 4024, XP011553192, ISSN: 1536-1276, [retrieved on 20140708], DOI: 10.1109/TWC.2014.2317779
- ZHEFEI HOU ET AL: "Weak signal detection based on stochastic resonance combining with genetic algorithm", COMMUNICATION SYSTEMS, 2008. ICCS 2008. 11TH IEEE SINGAPORE INTERNATIONAL CONFERENCE ON, IEEE, PISCATAWAY, NJ, USA, 19 November 2008 (2008-11-19), pages 484 - 488, XP031400085, ISBN: 978-1-4244-2423-8, DOI: 10.1109/ICCS.2008.4737231
- KUN ZHENG ET AL: "Spectrum Sensing in Low SNR Regime via Stochastic Resonance", ARXIV.ORG, CORNELL UNIVERSITY LIBRARY, 201 OLIN LIBRARY CORNELL UNIVERSITY ITHACA, NY 14853, 3 June 2009 (2009-06-03), XP080327544, DOI: 10.1109/CISS.2010.5464907

## Description

### Field

This invention relates to a method and apparatus for signal detection based on stochastic resonance.

### Background

Given the increasing proliferation of devices that use radio spectrum and the resulting shortage of capacity in allocated spectrum bands, new technologies are being introduced that allow devices to access unused spectrum bands dynamically to serve traffic demands. These new technologies require reliable, dependable, and trusted spectrum sensing capabilities in order to make accurate assessments of spectrum availability in the surrounding operational area. Such capabilities will assist devices and associated radio equipment in identifying available spectrum that can be accessed without causing interference to the incumbent users of that spectrum.

The area of spectrum sensing has received much attention from the researchers. The development of spectrum sensing and spectrum sharing techniques enable the spectrum reuse in many areas. The most challenging issue of spectrum sensing is to detect the weak primary signal under very low signal-to-noise ratio (SNR) environment. For example, the main requirement on a TV white space device is that it should be able to detect the presence of TV signals and wireless microphone signals at a received power level of -114 dBm. The noise power level of a 6 MHz TV channel is typically around -100 dBm (including a 6 dB noise figure), and therefore the -114 dB, received power level translates to a SNR of around -15 dB. There is a trade-off between sensing performance/reliability and sensing time. Known sensing algorithms such as energy detection (in the absence of noise power uncertainty) and feature based detection are capable of detecting signals as low as -21dB if the sensing time is long enough. Unfortunately this long sensing time makes the design and complexity of these algorithms impractical. Other challenges include maintaining a constant false-alarm rate, sensitivity to noise power variations and computational complexity, which influences the hardware requirements of the sensing algorithm.

Z. Hou, J. Yang, Y. Wang, and K. Wang, "Weak signal detection based on stochastic resonance combining with genetic algorithm," Communication Systems, 2008, ICCS 2008, 11th IEEE Singapore International Conference on, Nov. 2008, pp. 484-488 describes weak periodic signal detection based on a mono stable SR system by adding noise and tuning system parameters adaptively.

Kun Zheng, Husheng Li, Seddik M. Djouadi and Jun Wang, "Spectrum Sensing in Low SNR Regime via Stochastic Resonance", arXiv:0906.0739vl, 3 Jun 2009 describes the use of stochastic resonance to detect primary users when the SNR is very low.

Wei Chen, Jun Wang, Husheg Li and Shaoqian Li, "Stochastic Resonance Noise Enhanced Spectrum Sencing in Cognitive Radio Networks", 06 December 2010 describes a spectrum sensing method based on stochastic resonance noise enhanced detection.

### Summary

In a first aspect, this specification describes a computer implemented signal detection method based on stochastic resonance according to claim 1.

In various embodiments, the performance of the method is robust to the base signal structure (modulation type and order).

Alternatively, or in addition, the performance of the method may be robust to noise uncertainty.

In some embodiments, the method addresses the problem of "SNR wall" for different detectors.

The method may comprise detecting narrowband or wideband signals.

In some embodiments, the method allows for blind spectrum/signal sensing and signal detection in very low SNR and under practical/realistic channel conditions, where the improvement in detection is not at the expense of increase in probability of false alarm. In some embodiments, the method allows for spectrum/signal sensing and signal detection in very low SNR and under practical/realistic channel conditions, where the sensing is robust to co-channel and adjacent channel interference

In some embodiments, the method can be used to enhance any signal for a specific purpose such as classification. The signal might be speech, audio, images, video, sensor data, telemetry, electrocardiograms, seismic data etc.

Processing the received signal to select one more parameters relating to the stochastic resonance system may include:
generating response signals using the stochastic resonance system, the response signals being generated using different trial values for one or more of said parameters,
determining values for the probability of detection and/or probability of false alarm for the generated response signals, and
selecting one or more parameter values which provide a response signal for which the probability of detection and/or probability of false alarm meets one or more criteria.

The one or more criteria may include probability of false alarm being below a desired threshold. Alternatively, or in addition, the one or more criteria may include maximising the probability of detection.

Selecting said one or more parameters relating to the stochastic resonance, SR, system may comprise:
selecting one or more SR coefficients; and then
selecting an SR noise parameter.

Selecting one or more parameters relating to the stochastic resonance, SR, system may comprise:
selecting a coarse range for an SR coefficient;
fine tuning to determine a value for the SR coefficient.

Processing the received signal to select one or more parameters may comprise performing a multi-taper frequency estimate.

Said one or more parameters may be selected based on a number of samples derived from the received signal.

The stochastic resonance system may incorporate additive noise, and processing the received signal to select one or more parameters relating to the stochastic resonance system may comprise performing a multi-taper frequency estimate.

The signal may comprise a single frequency signal. Alternatively, the signal may comprise a multi-frequency signal. The multi-frequency signal may comprise a phase/amplitude modulated signal.

The signal may comprise a multi-carrier signal. The multi-carrier signal may comprise a phase/amplitude modulated signal.

In a second aspect, this specification describes apparatus comprising means to carry out the method disclosed herein.

In a third aspect, this specification describes computer-readable instructions which, when executed by computing apparatus, cause the computing apparatus to perform the method disclosed herein.

### Brief description of the drawings

In order that the invention may be more fully understood, embodiments thereof will now be described by way of illustrative example with reference to the accompanying drawings, in which:
Figure 1 is a schematic block diagram of a signal detection system in accordance with one example embodiment;
Figure 2 illustrates a method of selecting parameters relating to a stochastic resonance system in accordance with one example embodiment;
Figure 3 illustrates an example of a range of valid stochastic resonance (SR) coefficients;
Figure 4 is a flow chart illustrating the overall system in accordance with one example embodiment;
Figure 5 illustrates operation of a binary search algorithm;
Figure 6 compares performance of an exemplary Stochastic Resonance aided Energy Detection (SR-ED) system with known schemes;
Figure 7 is an example of the impact of sample size on the performance of an SR-ED system;
Figure 8 presents a performance comparison in noise uncertainty of 0.5 dB;
Figure 9 presents a performance comparison in the absence of signal;
Figure 10 presents a comparison of non-SR spectrum sensing algorithms with a spectrum sensing algorithm based on SR;
Figure 11 presents an example of detection performance for SR-ED for different numbers of symbols;
Figure 12 presents a performance comparison for different cyclic prefix (CP) ratios;
Figure 13 presents a performance comparison under noise uncertainty;
Figure 14 shows a table comparing performance of different algorithms.
Figure 15 includes tables illustrating performance comparison for multi-carrier signal detection.

### Detailed description

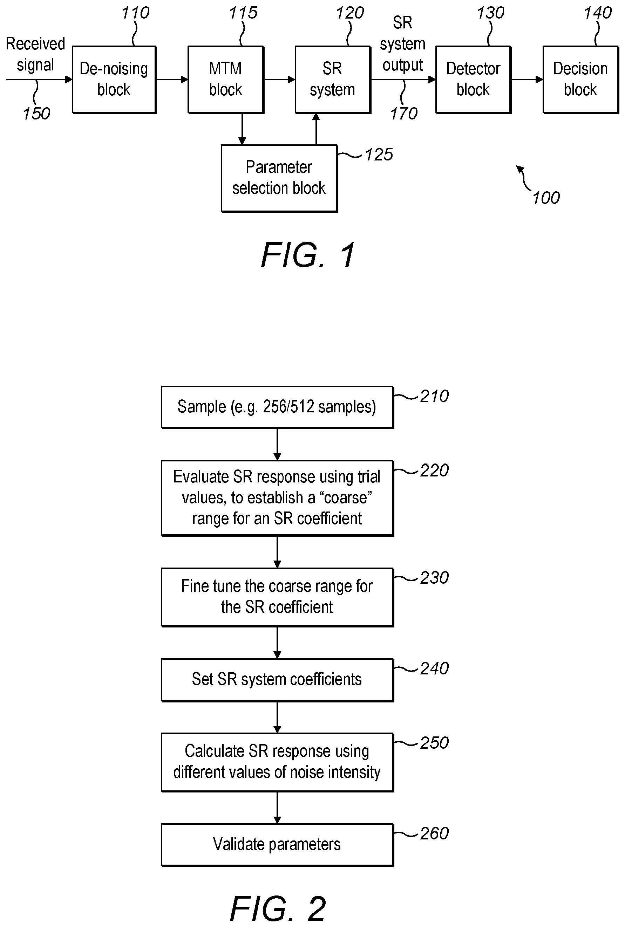

Figure 1 is a schematic block diagram of a signal detection system 100 configured in accordance with one example embodiment. As shown, the system 100 includes a de-noising block 110, a multi-taper spectrum estimation (MTM) block 115, a stochastic resonance (SR) system 120, a parameter selection block (125), a detector block 130 and a decision block 140. The components 110, 115, 120, 125, 130, 140 of the system 100 may each be implemented in software, hardware or firmware. In one embodiment the components 110, 115, 120, 125, 130, 140 comprise software, i.e. computer executable instructions, which, when executed by a processor, cause respective functionality to be carried out.

The signal detection system 100 is configured to detect the presence of a signal within the received signal 150, despite the presence of significant noise and/or other channel impairments (e.g. fading and/or timing offset and/or frequency offset) in the received signal 150. The signal to be detected may comprise a sinusoidal signal, or a multi-frequency signal such a single/multi carrier complex modulated signal. The received signal may comprise an RF signal, the baseband equivalent of which may be generated and provided as input to the de-noising block 110.

In the de-noising block 110, a de-noising method such as a wavelet based de-noising method may be used. A suitable wavelet based de-noising method is described in Han Lingyun, Li Yueliua, "An Algorithm of De-noising of Millimeter Wave Radar Signal based on Stochastic Resonance", International Journal of Signal Processing, Image Processing and Pattern Recognition Vol. 7, No. 6 (2014), pp. 325-334. De-noising is optional. It is a computationally expensive option, but on the other hand has been found to improve probability of detection by 3-4dB.

In the MTM block 115, an MTM method such as that described in T.P. Bronez, "On the Performance Advantage of Multitaper Spectral Analysis", IEEE Trans on Signal Proc., vol. 40, pp 2941-2946, December 1992, may be used. The output of the MTM block 115 is received at the stochastic resonance system 120. The stochastic resonance (SR) system 120 may comprise a bistable system such as described in Jun Wang, Xin Ren, Shaowen Zhang, Daiming Zhang, Husheng Li, "Adaptive Bistable Stochastic Resonance Aided Spectrum Sensing", IEEE Transactions on Wireless Communications, Vol. 13, No. 7, July 2014, or it may alternatively comprise a single-well or a tri-stable well system. Hence, the SR system 120 may have one or more parameters, e.g. one parameter, "a", (single-well), two parameters, "a" and "b", (double-well / bistable system), or three parameter, "a", "b" and "c" (tri-stable well system). In some examples, the stochastic resonance system is defined by a stochastic differential equation (such as the Langevin equation) which incorporates a noise signal as one of its terms, wherein the output 170 of the stochastic resonance system as shown in Figure 1 is the solution of this equation. Numerical solution of the SR system may be obtained by well-established numerical methods e.g. the Runge-Kutta method.

Parameters "a", "b", "c" are referred to herein as "SR coefficients". A further parameter relating to the SR system is the intensity of the noise signal, which is referred to herein as the "SR noise intensity" or equivalently, as the "D" parameter.

The output of the SR system 120 is provided to the detector block 130. The detector block may employ Energy Detection (ED). Alternatively, feature based detection, e.g. cyclostationary based detection, covariance based detection, or correlation level based detection could be used. The output of the detector block 130 is provided to the decision block 140, which uses one of several known methods to determine signal presence. In one example the decision block 140 is configured to determine signal presence by calculating a test statistic based on the output of the detector block and comparing against a threshold.

The parameter selection block 125 is configured to automatically determine parameters relating to the SR system. More specifically, the parameter selection block 125 automatically determines the one or more SR coefficients and also the SR noise intensity. In some examples, the parameter selection block determines the SR coefficients first, and then determines the SR noise intensity ("D" parameter).

The parameters are determined based on the response of the SR system to the received signal. More specifically, the parameter selection block 125 receives output from the MTM block 115 and causes a response signal to be generated using the SR system. The response signal may for example be defined by the energy of the SR system output normalised by the detection threshold. By adjusting trial values for the parameters, one or more values for each of the parameters may be determined based on the response of the SR system to the received signal. In this way, parameter block 125 returns optimal values for the parameters to the SR system 120.

The parameters are selected based on desired criteria for probability of detection P_{d} and probability of false alarm P_{FA}. The desired criteria for P_{d} and P_{FA} may for example be to maximise P_{d} while keeping P_{FA} under a desired threshold (e.g. under 10%). P_{d} and P_{FA} may be determined based on SR system response in the same way as they are determined in Classical Energy Detection of a received signal. Thus, determining P_{d} may include setting a threshold according to a desired P_{FA}, calculating the energy of the SR output signal, comparing against a threshold and declaring a signal to be present if the calculated energy exceeds the threshold. These steps may be repeated over and over, each time using a different noise and channel, to calculate P_{d} (Monte-Carlo Simulation). P_{fa} may be calculated in a similar manner, but in the absence of signal, thereby to measure the probability of the detector deciding that a signal is present when in fact it is absent.

Figure 2 illustrates operation of the parameter selection block 125 in accordance with one example embodiment. In this example the output of the MTM block 115 is sampled to provide a number of samples, e.g. 256 or 512 samples (step 210). A response signal is generated with the SR system (step 220) using the samples. That is, the (sampled) received signal is introduced into the signal detection system 100 shown in Figure 1, and the response is evaluated. Trial values for one or more SR coefficients are adjusted with the SR noise intensity set to zero, and one or more ranges of trial values which achieve the desired criteria for P_{d} and P_{FA} are stored. A "best" trial value for a particular SR coefficient may then be selected by testing a number of values within the determined range and selecting the value which maximises P_{d} while keeping P_{FA} under a desired threshold.

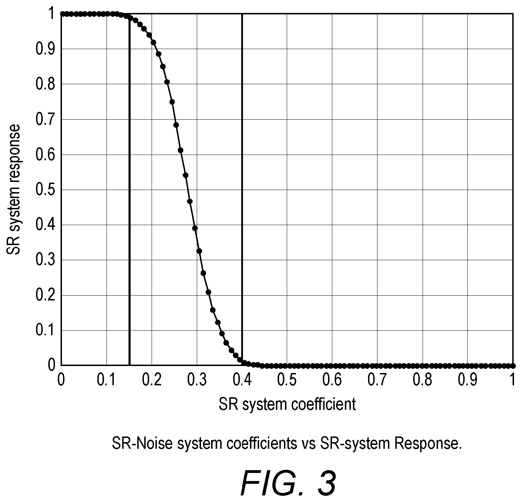

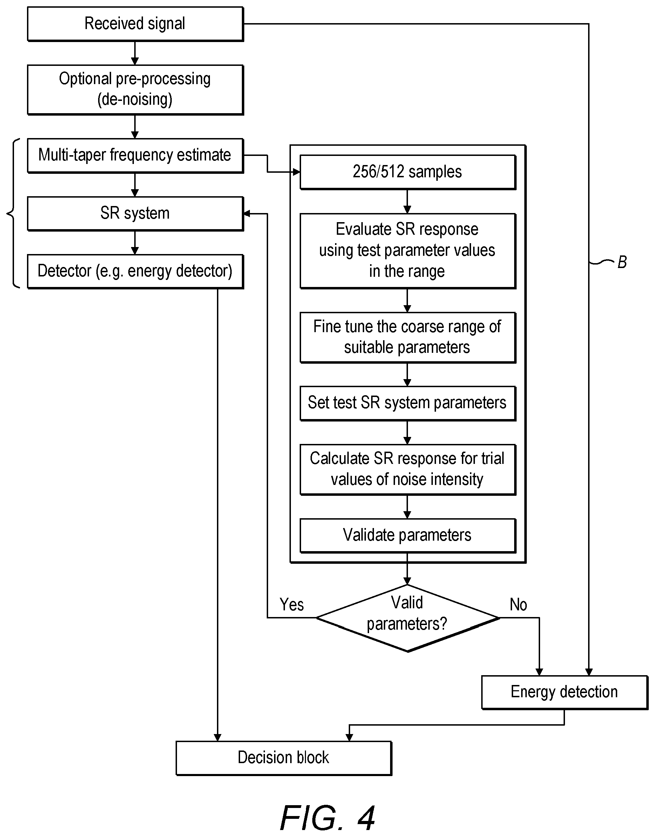

This initial "coarse" evaluation of the SR coefficients can have two outcomes. The first outcome can be that a definitive/valid range is determined. In the example of Figure 3, the valid SR coefficients are in the range 0.15-0.4, highlighted by the vertical lines in Figure 3. The second outcome is a zero response, which indicates absence of signal and the presence of noise. If this second outcome is observed, the step 220 will not return any parameters, i.e. the parameters are declared invalid, whereupon the SR system 120 is bypassed and the received signal 150 is fed directly to the detector block 130, without any SR pre-processing. The output of the detector will then confirm the presence of noise. This "bypass" is illustrated by the arrow "B" in Figure 4, which is a schematic illustrating the overall system in one diagram.

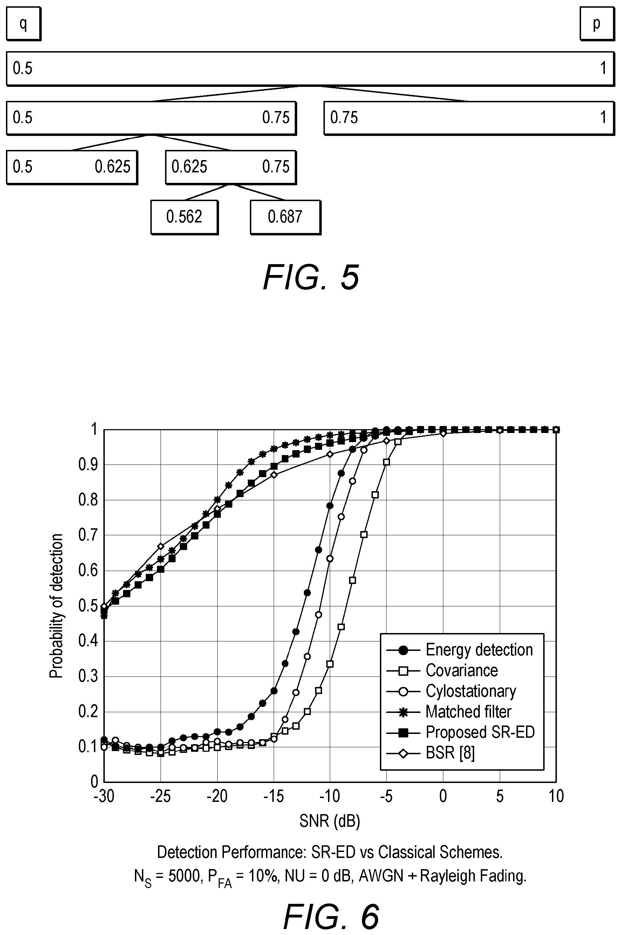

Returning now to Figure 2, as shown step 230 comprises fine-tuning the coarse range of parameters determined in step 220 to find the most optimised values for one or more SR coefficients. To reduce the number of computations needed to reach the best value, a search algorithm such as a binary search algorithm (shown in Figure 5) may be used for the fine tuning. The algorithm may evaluate the SR system response on mid value of the coarse range and sub-ranges. If the response has entered the 'dead zone", the algorithm may return the last value to be set as an SR coefficient. By 'dead zone', we mean the area in which the output of the SR system is weak and cannot cross the threshold. That is to say, the "dead zone" is the range of SR coefficients in which the SR system does not perform or enhance the signal energy.

In the case of single-well system only one SR coefficient "a" is determined. For a bistable stable, two SR coefficients "a" and "b" are determined. In this case, the "a" parameter may be determined first by following the steps 210, 220, 230, and then the "b" parameter may be determined by following the same steps. Similarly, for a tristable system the "a", b" and "c" parameters may be determined one after the other. The "D" parameter is determined in a similar fashion to the "SR coefficients". Once value(s) for the SR coefficients(s) are determined, the parameter(s) of the SR system are set accordingly (step 240).

In step 250, the fine-tuned values of the SR coefficient(s) as determined in step 330 are used to select one or more values for the SR noise intensity (parameter "D"). This is done by assessing the SR system response to variation of the SR noise intensity. If the SR noise intensity is too low, the system will "jiggle" in the current well without any performance improvement. If the SR noise intensity is too high, it will overwhelm the test statistic. The trial value for the SR noise intensity is adjusted to maximise P_{d} with P_{FA} under the desired threshold, and the optimal value is selected.

Step 260 is a validation step which checks that the parameters that have been selected by the algorithm are not invalid, i.e. that they are not zero values or extreme values.

Following the above described steps, the selected parameters are available for use in the SR system block shown in Figure 1. In some embodiments, the process of determining selected parameters may be repeated periodically. For example, in TV white space devices, the process could be repeated at least once per minute. Alternatively, for LTE communication on unlicensed bands sensing could for example be performed every LTE subframe (1 ms duration). The frequency with which the process is repeated may be reduced over time if channel conditions do not change drastically.

The proposed automated scheme for selecting the parameters can be used with any SR system. For example in the case of single-well system only one SR coefficient and calculation of the "D" parameter is needed. Similarly for tristable systems, all three coefficients of SR system may be determined first, and then "D" is calculated to ensure maximum P_{d}.

Hence, as will be understood from the foregoing, in various embodiments of the invention, the phenomenon of stochastic resonance is exploited to provide more reliable and robust signal detection. Parameters for an SR system are automatically selected based on the SR system response to the received signal. More specifically, parameter values may be selected which provides a response signal which maximises probability of detection whilst keeping probability of false alarm below a desired threshold.

In various embodiments the system is therefore "blind" to the received signal, i.e. the same processing steps are employed independent of the characteristics of the received signal. Thus, it is not necessary to have knowledge of the signal to be determined or of the noise characteristics of the received signal. More specifically, there is no need to estimate background noise variance, nor the amplitude/phase of the signal to be detected.

Embodiments of the present invention have been found to provide 90% detection probability at very low SNRs under practical/realistic channel considerations whilst maintaining a constant false-alarm probability, and to achieve superior performance compared to existing methods. For example, embodiments provide reduced sensing time and reduced computational time compared to known schemes, and may require a lower number of samples. In one example, the system may be "trained" (i.e. the parameters may be determined) in 10-20µs. In the case of an OFDM signal this translates to 256 samples for a 10MHz signal and 512 samples for a 20 MHz signal.

### Performance results for SR-ED

Various further performance results will now be discussed in connection with a detector based on energy detection (ED). The proposed method with ED is herein referred to as SR-ED (Stochastic Resonance aided Energy Detection).

It should be noted that the invention is not limited to SR-ED. The SR parameter estimation methodology described herein is applicable to and independent of the type of detector used. In particular, feature based detection e.g. cyclostationary based detectors and covariance based detectors may be used an alternative to energy detection.

Moreover it should be noted that the performance results discussed herein and the configurations which give rise to them are discussed by way of example only and, like all examples described herein, are not limiting on the scope of protection as defined by the appended claims. Moreover although examples discussed below are described in the context of spectrum sensing, the invention is not limited to spectrum sensing and may be employed in other signal detection applications.

### Examples of Detection Performance for Single-Carrier Signals

Baseband equivalent of complex modulated BPSK, QPSK, 16-QAM and 64-QAM signals were used to generate the results for this example. The channel had AWGN noise and Rayleigh fading. The results were accumulated/averaged over 1000 Monte-Carlo simulations.

### i. Examples of Performance Comparison between SR-ED and Classical Schemes

To verify the SNR gains, performance of SR-ED was compared with known schemes in Rayleigh fading channel with AWGN (See Figure 6). For more detail regarding the known schemes referenced in Figure 6 see "D. D. Ariananda, M. K. Lakshmanan and H. Nikookar, "A survey on spectrum sensing techniques for cognitive radio," 2009 Second International Workshop on Cognitive Radio and Advanced Spectrum Management, Aalborg, 2009, pp. 74-79."

The simulation setup was as follows: the signal of interest is assumed to be 16QAM modulated. Sensing time is fixed to 10 ms. In these experiments, a bi-stable double-well is used as the SR system. The SR parameters a, b and noise intensity D are obtained to achieve the P_{D} of 90% at SNR=-18dB, at the constant P_{FA} constraint of 10%.

### ii. Example of Performance Evaluation with Different Sample Sizes

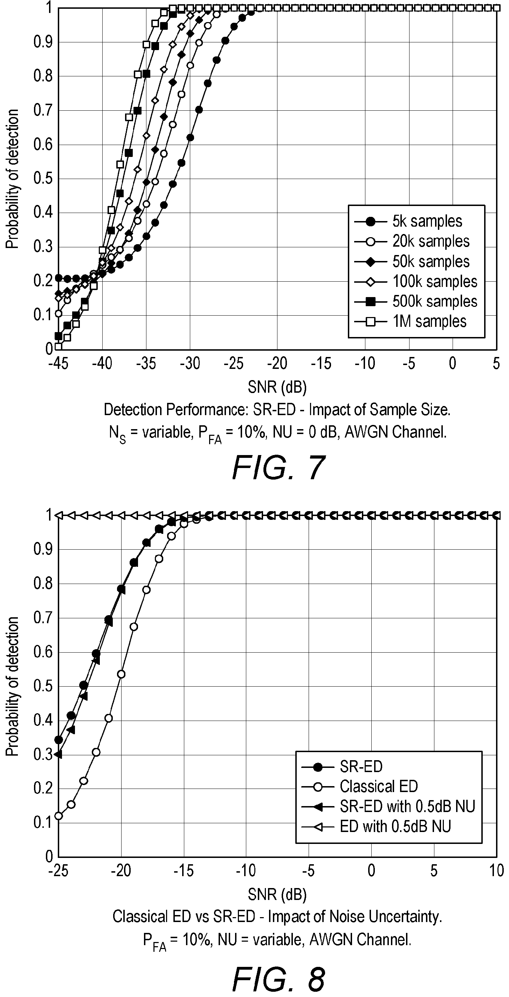

The number of samples can be kept low to ensure quick sensing time. Examples on large sample size for sinusoidal signals showed that SR-ED achieved Figure 7:
- P_{D} = 90%, @ SNR = -34 dB using 500k samples.
- P_{D} = 90%, @ SNR = -26 dB using 5k samples.

### iii. Example of Performance Evaluation in Noise Uncertainty (NU)

The performance of classical energy detection degrades severely under noise uncertainty. Figure 8 shows performance of an exemplary SR-ED system and classical energy detection (ED) in noise uncertainty of 0.5 dB. ED fails to discriminate between Signal and Noise, resulting in 100% False Alarm. SR-ED still works at the required P_{FA} of 10%, within the SNR range depicted.

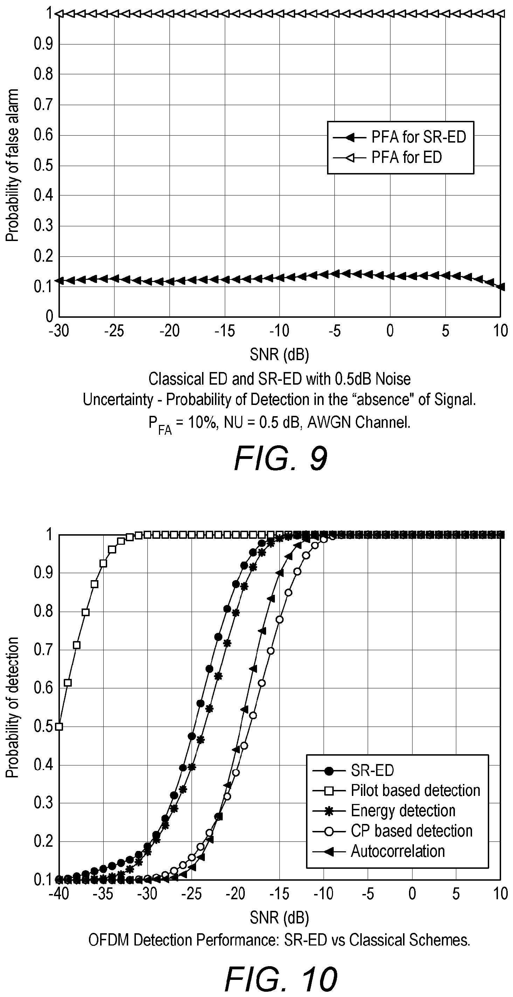

In the absence of signal, a detector should not produce false alarms. Figure 9 shows the performance of classical ED and the exemplary SR-ED detector in the absence of signal. Energy detection gives 100% false alarm in noise variance of 0.5dB, as shown in Figure 9. SR-ED, on the other hand, follows the constraint of false alarm.

### Examples of Detection Performance for Multi-Carrier Signals

As discussed above, the signal to be detected within the received signal may comprise a sinusoidal signal or a multi-frequency signal such as a multi-carrier signal. The multi-frequency signal may alternatively, or in addition, comprise a chirp signal, or an impulse signal.

This section presents examples of performance evaluation of multi-carrier signals using the algorithm described herein. An OFDM modulated signal has been used to generate these results, but the proposed algorithm may be employed in other multi-carrier modulation techniques in the same manner. The underlying modulation may be PSK or QAM. In these examples, the channel has AWGN noise, frequency selective fading (FSF) with linear power delay profile and introduces timing offset (TO) and frequency offset (FO) in the received signal. One OFDM symbol corresponds to 1024 complex samples (channel/transmission bandwidth of 10 MHz). The results were accumulated over 1000 Monte-Carlo simulations.

### i. Example of Performance Comparison between SR-ED and Classical Schemes for Multi-Carrier signals

Figure 10 presents a comparison of non-SR OFDM spectrum sensing algorithms and a spectrum sensing algorithm based on the present SR based approach. Experiments were performed under AWGN channel conditions as described in D. Danev, E. Axell and E. G. Larsson, "Spectrum sensing methods for detection of DVB-T signals in AWGN and fading channels," 21st Annual IEEE International Symposium on Personal, Indoor and Mobile Radio Communications, Instanbul, 2010, pp. 2721-2726. In this example the modulation type was 16-QAM OFDM. No receiver impairments were included. 2000 samples were used for a single sensing decision. Note that the ED algorithm as employed in Clear Channel Assessment Energy Detection (CCA-ED) in 802.11y, doc.: IEEE 802.19-07/0010r0, May 2007, has little tolerance to noise uncertainty, the algorithm will give P_{FA} of 100% for noise uncertainty as low as 0.5dB. Note also that pilot based detection is prone to synchronization errors and pilot-based detection is non-blind.

### ii. Example of Performance Evaluation with Different Sample Sizes

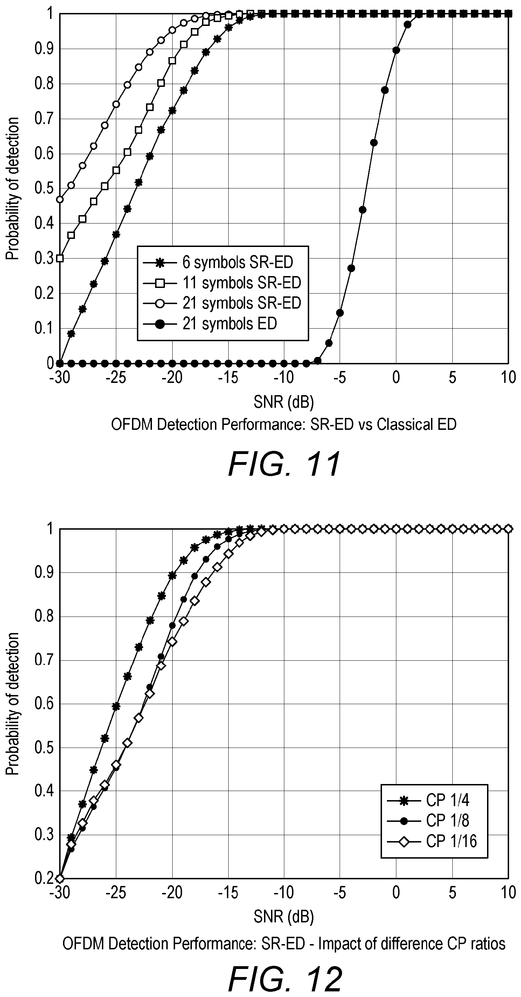

Figure 11 presents an example of detection performance for SR-ED for different numbers of symbols. 6 OFDM symbols approximately correspond to 5000 complex samples. It is assumed that a random part of the first symbol may be clipped off due to timing synchronization error. For quicker sensing, PD = 90 % can be achieved at SNR = -17dB using 6 OFDM symbols (= 5k complex samples). For comparison, the performance of classical ED with 21 symbols is also depicted.

### iii. Example of Performance Evaluation with Different Cyclic Prefix (CP) Ratios

Feature based detection of the OFDM modulated signals may use CP structure to detect the presence of the signal. The performance of correlation based detectors decreases as the CP ratio drops. The present algorithm was tested with different CP ratios. As the underlying detection is based on enhanced energy of the received signal, the performance is not dependant on CP ratio. Figure 12 presents the performance of the algorithm for different CP ratios according to an embodiment. Observed performance was slightly higher for CP ratio 1/4, but the performance does not severely degrade when the CP ratio is changed from 1/4 to 1/16. Note that if CP is 1/4 of an OFDM symbol that corresponds to receivers being far from the transmitter -- reference is directed to Zhongding Lei, and Francois P. S. Chin, "Sensing OFDM Systems Under Frequency-Selective Fading Channels", IEEE TRANSACTIONS ON VEHICULAR TECHNOLOGY, VOL. 59, NO. 4, MAY 2010.

### iv. Example of Performance Evaluation in Noise Uncertainty

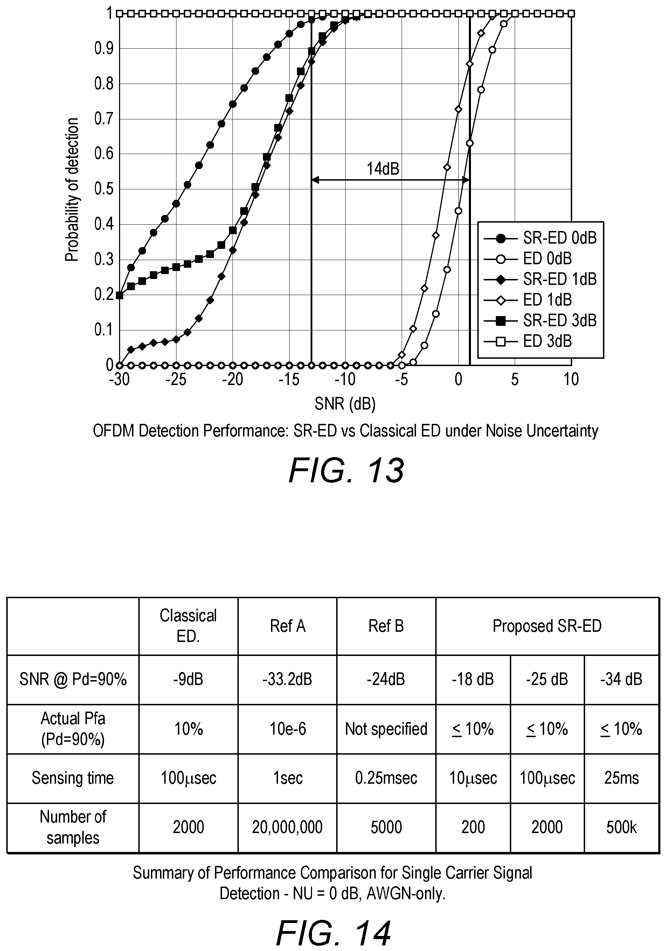

Figure 13 shows the performance of SR-ED and ED in noise uncertainty according to one embodiment. 22 OFDM symbols which correspond to approximately 2k samples were used. The graph shows 0dB, 1dB noise uncertainty. Note that for SR-ED:
- PD = 90% can be achieved at SNR = -17dB with 0dB noise uncertainty.
- PD = 90% can be achieved at SNR = -17dB with 1dB noise uncertainty.
- PD = 90% can be achieved at SNR = -12dB with 3dB noise uncertainty.
- Note that the classical energy detection which assumes 100% knowledge of noise variance, completely fails at 1dB noise uncertainty, resulting in 100% false alarm.

### SR-ED performance - Summary

Embodiments of the SR-ED algorithm described herein can achieve comparable performance with significantly lower number of samples compared to known techniques.

To illustrate this, the SR-ED algorithm according to one embodiment was compared to the work described in Abdulaziz M. Ghaleb, Gamal A. Almwald, Mohammed Nour Hindia, Ahmed Wasif Reza, Kamarul Ariffin Noordin, Kahartidin Dimyati, "A New Dynamic Max-to-Mean Ratio Energy Spectrum Sensing Model for 5G Cognitive Radio Systems", International Conference on Mathematical Sciences & Computer Engineering (ICMSCE 2015), Jan 13, 2015, which will be referred to herein as "Ref A". Ref A describes a non-SR based BLIND sensing algorithm, for single-carrier signal detection. The probability of detection of the algorithm in Ref A as shown in Figure 12 of Ref A, is 80% at SNR = -35dB for 20 million (20M) samples. It has been found that the SR-ED algorithm can achieve comparable performance with significantly lower number of samples. In one embodiment, the SR-ED based proposed algorithm outperforms with only 1M samples for single-carrier signal detection under similar channel conditions (AWGN). In one embodiment, the performance of the SR-ED algorithm is Pd = 90% at -32dB using 100k samples which is less than 1% of the samples used in Ref A. Note that with same sample size as used in Ref A i.e. 20M samples, the proposed SR-ED scheme can achieve a far superior performance of Pd=90% at SNR = -35dB, whilst maintaining a constant false-alarm probability.

Figure 14 illustrates the performance comparison between the SR-ED algorithm according to one embodiment and classical ED. Comparison is also shown with:
Abdulaziz M. Ghaleb, Gamal A. Almwald, Mohammed Nour Hindia, Ahmed Wasif Reza, Kamarul Ariffin Noordin, Kahartidin Dimyati, "A New Dynamic Max-to-Mean Ratio Energy Spectrum Sensing Model for 5G Cognitive Radio Systems", International Conference on Mathematical Sciences & Computer Engineering (ICMSCE 2015), Jan 13, 2015 ("Ref A", see above); and
"Jun Wang, Xin Ren, Shaowen Zhang, Daiming Zhang, Husheng Li, "Adaptive Bistable Stochastic Resonance Aided Spectrum Sensing" IEEE TRANSACTIONS ON WIRELESS COMMUNICATIONS, VOL. 13, NO. 7, JULY 2014. (referred to as "Ref B")

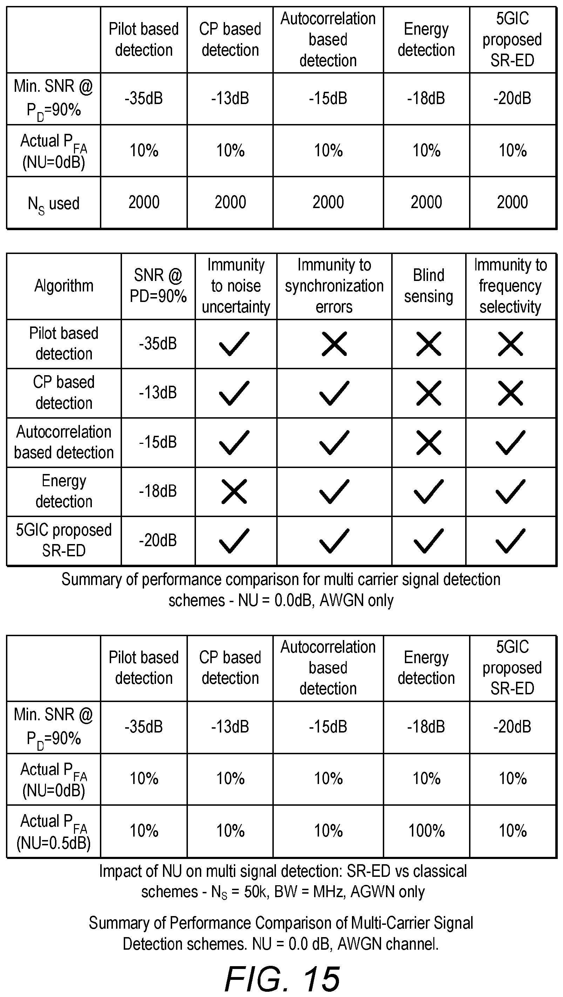

Figure 15 shows tables illustrating performance comparison for multi-carrier signal detection. As shown, a multi-carrier signal detection embodiment of the SR-ED scheme is compared with known OFDM sensing techniques in terms of P_{D} and P_{FA}. For further details regarding the known OFDM techniques to which the SR-ED is compared, see D. Danev, E. Axell and E. G. Larsson, "Spectrum sensing methods for detection of DVB-T signals in AWGN and fading channels," 21st Annual IEEE International Symposium on Personal, Indoor and Mobile Radio Communications, Instanbul, 2010, pp. 2721-2726.

In one multi-carrier embodiment the SR-ED algorithm may use 20 µs of training time and 1ms of sensing time to achieve 90% PD at -19dB SNR to sense a 10MHz OFDM signal, with the channel conditions remaining constant for this duration (20us + 1ms ¹). In another multi-carrier embodiment the SR-ED algorithm may use 10 µs of training time and 1ms of sensing time to achieve 90% PD at -20dB SNR to sense a 20MHz OFDM signal, with the channel conditions remaining constant for this duration (10us + 1ms ).
¹The value of 1ms for sensing corresponds to 1024 samples (= 1 OFDM symbol) used for detection of 10 MHz wide OFDM signal.

Many variations and modifications to the SR-based systems and methods described herein are possible.

For example, feature based detection such as cyclostationary based detectors or covariance based detectors may be used an alternative to energy detection.

Moreover, although the signal detection systems and methods described may be used for spectrum sensing, this specification is not so limited.

Various applications are envisaged, for example:
1. In some embodiments the disclosed scheme can satisfy the IEEE 802.22 requirement of P_{D} = 90 %, P_{FA} <= 10% using 11 OFDM symbols (~ 10k complex samples) corresponding to sensing duration of 10 ms (IEEE 802.22 targets: Channel Detection Time <=2 seconds, to >=90% Probability of Detection with a False Alarm rate of <=10%, and Incumbent Detection Thresholds of i) -107 dBm (200kHz BW) for Part 74 devices & ii) -116 dBm (6 MHz BW) for DTV) under severe channel impairments.
2. In some embodiments the disclosed scheme can be used to improve WIFI/WLAN system KPIs (KPIs that are strongly dependent on channel assessment performance e.g. throughput, delay, and collision probability².
3. In some embodiments the disclosed scheme can be used to improve (and/or make intelligent trade-offs between metrics of interest) coexistence between licensed-licensed & licensed/unlicensed-lightly-licensed/unlicensed (e.g. LTE-U, LTE-LAA etc.) and unlicensed-unlicensed (e.g. WIFI-ZIGBEE etc.) and the system performance metrics e.g. fairness, throughput and delay, e.g. by allowing to set a lower (more sensitive) detection thresholds during simultaneous (same channel/band) operation. In case of LTE-LAA for example, the LTE-LAA throughput can be increased due to lower energy detection
   threshold, and the proposed scheme can help compensate for the SNR loss³ - Also operation at lower SNR, allows for higher coverage probability.
4. In some embodiment the disclosed scheme can be applied to SR-based cooperative/collaborative sensing for further enhancements in detection/sensing performance.
5. In some embodiments the disclosed scheme can be used to improve hidden node problem.
6. In some embodiments the disclosed schemes can be used to improve LTE RACH mis-detection probability, in dense deployments and for autonomous UE sensing in V2X/V2I deployments.
7. Some embodiments may be used for output SNR improvement in mmWave radar (in combination wither other detection techniques) where echo signals often contain noise and clutter and because of rain and fog's influence, the performance can drop greatly, where combination of stochastic resonance and multi-scale wavelet decomposition is used to improve SNR.
8. Some embodiment may be used to detect millimetre wave radar echo signals under both white & coloured noise, where combination of e.g. a stochastic resonance and multi-scale wavelet decomposition can be used to improve SNR.
² Note however that with classical ED, if the CCA-ED is reduced to a lower value (more sensitive CCA-ED) then: the false-alarm rate and the exposed node probability will increase; and the hidden node probability will decrease. Essentially the detection reliability of conventional ED in CCA is low i.e. Errors in detection typically give rise to reductions in throughput and the "exposed"/"hidden node" problems.
³ LTE with listen-before-talk and random back-off - LTE needs to accept either lower channel access priority (e.g. larger contention window size) or more sensitive CCA thresholds (e.g., -80 dBm) to protect Wi-Fi. Specifically, Wi-Fi achieves better DST and rate coverage performance compared to the baseline scenario when LTE has either the same channel access priority (i.e., same contention window size) as Wi-Fi with more sensitive CCA threshold (e.g., -82 dBm), or lower channel access priority (i.e., larger contention window size) than Wi-Fi with less sensitive sensing threshold (e.g., -77 dBm). Under both scenarios, LTE is shown to maintain acceptable rate coverage performance.

Moreover, while the SR noise type may be additive or multiplicative noise, the inventors have found that combination of additive noise and the MTM technique leads to improved performance in terms of P_{d} and P_{FA}.

Moreover, the channel noise, can be white or coloured (additive or multiplicative).

In one variation, the described detection method can be used/incorporated in multilevel, serially cascaded or parallel banks of SR-based pre-processing stage.

In some embodiments, performance of the method is immune to the modulation order and base signal structure. In some embodiments, the performance can counter noise uncertainty. In some embodiments, the method can improve on the SNR Wall associated with known detectors.

In some embodiments, the method can detect narrowband or wideband signals.

In various embodiments, the invention can achieve blind spectrum/signal sensing and signal detection in very low SNR and tinder practical/realistic channel conditions, where the improvement in detection is not at the expense of increase in P_{FA} nor reduction in the detection dynamic range. As discussed above embodiments of the invention can achieve superior performance compared to state of the art, non-SR detectors (CP-based), as well as the state of art, SR detectors for sensing of sinusoidal and single/multi-carrier modulated signals.

Some portions of above description present the features of the present invention in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, reference to these arrangements of operations in terms of modules should not be considered to imply a structural limitation and references to functional names is by way of illustration and does not infer a loss of generality.

Unless specifically stated otherwise as apparent from the description above, it is appreciated that throughout the description, discussions utilising terms such as "processing" or "computing" or "calculating" or "determining" or the like, refer to the action and processes of a computer system, or similar electronic computing device, that manipulates and transforms data represented as physical (electronic) quantities within the computer system memories or registers or other such information storage, transmission or display devices.

Certain aspects of the present invention include process steps and instructions described herein in the form of an algorithm. It should be understood that the process steps, instructions, of the present invention as described and claimed, are executed by computer hardware operating under program control, and not mental steps performed by a human. Similarly, all of the types of data described and claimed are stored in a computer readable storage medium operated by a computer system, and are not simply disembodied abstract ideas.

The present invention also relates to an apparatus for performing the operations herein. This apparatus may be specially constructed for the required purposes, or it may comprise a general-purpose computer selectively activated or reconfigured by a computer program stored on a computer readable medium that can be executed by the computer. Such a computer program are stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein can be executed by any type or brand computer or other apparatus. Various general-purpose systems may also be used with programs in accordance with the teachings herein, or it may prove convenient to construct more specialized apparatus to perform the required method steps. The required structure for a variety of these systems will be apparent to those of skill in the art, along with equivalent variations.

## Claims

1. A computer implemented signal detection method based on stochastic resonance, the method comprising:
receiving a signal;
processing the received signal to select one or more parameters relating to a stochastic resonance system based on the probability of detection and/or probability of false alarm meeting one or more criteria;
generating an output of the stochastic resonance system, the output of the stochastic resonance system being dependent on the received signal; and
detecting a signal-of-interest within the received signal using said output;
wherein the parameters are selected by a parameter selection algorithm which is independent of the characteristics of the received signal, including noise characteristics of the received signal; and
wherein the probability of detection is defined as the probability that the method correctly identifies the presence of a signal within the received signal, and the probability of false alarm is defined as the probability that the method falsely identifies the presence of a signal within the received signal when there is no such signal; and
wherein processing the received signal to select one or more parameters relating to the stochastic resonance system includes:
generating response signals using the stochastic resonance system, each of the response signals being generated using different trial values for one or more of said parameters,
determining values for the probability of detection and/or probability of false alarm for the generated response signals, and
selecting as the one or more parameters the trial values which generate a response signal for which the probability of detection and/or probability of false alarm meets the one or more criteria.

2. A signal detection method according to claim 1, wherein the one or more criteria includes probability of false alarm being below a desired threshold.

3. A signal detection method according to claim 1 or claim 2, wherein the one or more criteria includes maximising the probability of detection.

4. A signal detection method according to any preceding claim, wherein selecting said one or more parameters relating to the stochastic resonance, SR, system comprises:
selecting one or more SR coefficients; and then
selecting a value for the intensity of the SR noise signal.

5. A signal detection method according to any one of claims 1-3, wherein selecting one or more parameters relating to the stochastic resonance, SR, system comprises:
selecting a range of trial values for an SR coefficient;
fine tuning the range of trial values to determine an optimal value for the SR coefficient.

6. A signal detection method according to any preceding claim wherein processing the received signal to select one or more parameters comprises performing a multi-taper frequency estimate.

7. A signal detection method according to any preceding claim, wherein said one or more parameters are selected based on a number of samples derived from the received signal.

8. A signal detection method according to any preceding claim, wherein the detected signal-of-interest comprises a multi-frequency signal.

9. A signal detection method according to any preceding claim, wherein the detected signal-of-interest comprises a multi-carrier signal.

10. A data processing apparatus comprising means for carrying out the method of any preceding claim.

11. Computer-readable instructions which, when executed by computing apparatus, cause the computing apparatus to perform the method of any one of claims 1 to 9.

## Patentansprüche

1. Computerimplementiertes Signaldetektionsverfahren auf Basis von stochastischer Resonanz, wobei das Verfahren Folgendes umfasst:
Empfangen eines Signals;
Verarbeiten des empfangenen Signals, um einen oder mehrere Parameter in Bezug auf ein System für stochastische Resonanz auf Basis davon auszuwählen, dass die Detektionswahrscheinlichkeit und/oder Fehlalarmwahrscheinlichkeit ein oder mehrere Kriterien erfüllen;
Generieren einer Ausgabe des Systems für stochastische Resonanz, wobei die Ausgabe des Systems für stochastische Resonanz von dem empfangenen Signal abhängig ist; und
Detektieren eines Signals von Interesse innerhalb des empfangenen Signals unter Verwendung der Ausgabe;
wobei die Parameter durch einen Parameterauswahlalgorithmus ausgewählt werden, der unabhängig von den Eigenschaften des empfangenen Signals, einschließlich Rauscheigenschaften des empfangenen Signals, ist; und
wobei die Detektionswahrscheinlichkeit als die Wahrscheinlichkeit definiert ist, dass das Verfahren das Vorhandensein eines Signals innerhalb des empfangenen Signals korrekt identifiziert, und die Fehlalarmwahrscheinlichkeit als die Wahrscheinlichkeit definiert ist, dass das Verfahren das Vorhandensein eines Signals innerhalb des empfangenen Signals falsch identifiziert, wenn es kein derartiges Signal gibt; und
wobei das Verarbeiten des empfangenen Signals, um einen oder mehrere Parameter in Bezug auf das System für stochastische Resonanz auszuwählen, Folgendes einschließt:
Generieren von Antwortsignalen unter Verwendung des Systems für stochastische Resonanz, wobei jedes der Antwortsignale unter Verwendung unterschiedlicher Versuchswerte für einen oder mehrere der Parameter generiert wird,
Bestimmen von Werten für die Detektionswahrscheinlichkeit und/oder Fehlalarmwahrscheinlichkeit für die generierten Antwortsignale und
Auswählen der Versuchswerte als den einen oder die mehreren Parameter, die ein Antwortsignal generieren, für das die Detektionswahrscheinlichkeit und/oder Fehlalarmwahrscheinlichkeit das eine oder die mehreren Kriterien erfüllen.

2. Signaldetektionsverfahren gemäß Anspruch 1, wobei das eine oder die mehreren Kriterien einschließen, dass die Fehlalarmwahrscheinlichkeit unter einem gewünschten Schwellenwert liegt.

3. Signaldetektionsverfahren gemäß Anspruch 1 oder Anspruch 2, wobei das eine oder die mehreren Kriterien Maximieren der Detektionswahrscheinlichkeit einschließen.

4. Signaldetektionsverfahren gemäß einem vorhergehenden Anspruch, wobei das Auswählen des einen oder der mehreren Parameter in Bezug auf das System für stochastische Resonanz, SR-System, Folgendes umfasst:
Auswählen eines oder mehrerer SR-Koeffizienten; und dann
Auswählen eines Werts für die Intensität des SR-Rauschsignals.

5. Signaldetektionsverfahren gemäß einem der Ansprüche 1-3, wobei das Auswählen eines oder mehrerer Parameter in Bezug auf das System für stochastische Resonanz, SR-System, Folgendes umfasst:
Auswählen eines Bereichs von Versuchswerten für einen SR-Koeffizienten;
Feinabstimmen des Bereichs von Versuchswerten, um einen optimalen Wert für den SR-Koeffizienten zu bestimmen.

6. Signaldetektionsverfahren gemäß einem vorhergehenden Anspruch, wobei das Verarbeiten des empfangenen Signals, um einen oder mehrere Parameter auszuwählen, Durchführen einer Multitaper-Frequenzschätzung umfasst.

7. Signaldetektionsverfahren gemäß einem vorhergehenden Anspruch, wobei der eine oder die mehreren Parameter auf Basis von einer Anzahl von Abtastungen ausgewählt werden, die von dem empfangenen Signal abgeleitet sind.

8. Signaldetektionsverfahren gemäß einem vorhergehenden Anspruch, wobei das detektierte Signal von Interesse ein Mehrfrequenzsignal umfasst.

9. Signaldetektionsverfahren gemäß einem vorhergehenden Anspruch, wobei das detektierte Signal von Interesse ein Mehrträgersignal umfasst.

10. Datenverarbeitungseinrichtung, umfassend Mittel zum Vornehmen des Verfahrens nach einem vorhergehenden Anspruch.

11. Computerlesbare Anweisungen, die, wenn sie durch eine Recheneinrichtung ausgeführt werden, die Recheneinrichtung dazu veranlassen, das Verfahren nach einem der Ansprüche 1 bis 9 durchzuführen.

## Revendications

1. Procédé de détection de signal mis en œuvre par ordinateur basé sur la résonnance stochastique, le procédé comprenant :
la réception d'un signal ;
le traitement du signal reçu pour sélectionner un ou plusieurs paramètres relatifs à un système de résonance stochastique sur la base de la probabilité de détection et/ou de la probabilité de fausse alarme répondant à un ou plusieurs critères ;
la génération d'une sortie du système de résonance stochastique, la sortie du système de résonance stochastique dépendant du signal reçu ; et
la détection d'un signal d'intérêt dans le signal reçu à l'aide de ladite sortie ;
lesdits paramètres étant sélectionnés par un algorithme de sélection de paramètres qui est indépendant des caractéristiques du signal reçu, comprenant les caractéristiques de bruit du signal reçu ; et
ladite probabilité de détection étant définie comme la probabilité que le procédé identifie correctement la présence d'un signal dans le signal reçu, et ladite probabilité de fausse alarme étant définie comme la probabilité que le procédé identifie faussement la présence d'un signal dans le signal reçu lorsqu'il n'y a pas de tel signal ; et
ledit traitement du signal reçu pour sélectionner un ou plusieurs paramètres relatifs au système de résonance stochastique comprenant :
la génération de signaux de réponse à l'aide du système de résonance stochastique, chacun des signaux de réponse étant généré à l'aide de valeurs d'essai différentes pour un ou plusieurs desdits paramètres,
la détermination des valeurs de la probabilité de détection et/ou de la probabilité de fausse alarme pour les signaux de réponse générés, et
la sélection comme le ou les paramètres des valeurs d'essai qui génèrent un signal de réponse pour lequel la probabilité de détection et/ou la probabilité de fausse alarme répond au ou aux critères.

2. Procédé de détection de signal selon la revendication 1, ledit ou lesdits critères comprenant la probabilité d'une fausse alarme inférieure à un seuil souhaité.

3. Procédé de détection de signal selon la revendication 1 ou la revendication 2, ledit ou lesdits critères comprenant la maximisation de la probabilité de détection.

4. Procédé de détection de signal selon une quelconque revendication précédente, ladite sélection dudit ou desdits paramètres relatifs au système de résonance stochastique, SR, comprenant :
la sélection d'un ou plusieurs coefficients SR ; et ensuite
la sélection d'une valeur pour l'intensité du signal de bruit SR.

5. Procédé de détection de signal selon l'une quelconque des revendications 1-3, ladite sélection d'un ou de plusieurs paramètres relatifs au système de résonance stochastique, SR, comprenant :
la sélection d'une plage de valeurs d'essai pour un coefficient SR ;
le réglage fin de la plage de valeurs d'essai pour déterminer une valeur optimale pour le coefficient SR.

6. Procédé de détection de signal selon une quelconque revendication précédente, ledit traitement du signal reçu pour sélectionner un ou plusieurs paramètres comprenant la réalisation d'une estimation de fréquence multitaper.

7. Procédé de détection de signal selon une quelconque revendication précédente, ledit ou lesdits paramètres étant sélectionnés sur la base d'un nombre d'échantillons dérivés du signal reçu.

8. Procédé de détection de signal selon une quelconque revendication précédente, ledit signal d'intérêt détecté comprenant un signal multifréquence.

9. Procédé de détection de signal selon une quelconque revendication précédente, ledit signal d'intérêt détecté comprenant un signal multiporteuse.

10. Appareil de traitement de données comprenant des moyens pour effectuer le procédé d'une quelconque revendication précédente.

11. Instructions lisibles par ordinateur qui, lorsqu'elles sont exécutées par un appareil informatique, amènent l'appareil informatique à réaliser le procédé de l'une quelconque des revendications 1 à 9.
